# EUROPEAN PATENT SPECIFICATION

(11) **EP 0 578 325 B1**
(45) Date of publication and mention of the grant of the patent: **09.10.1996**
(21) Application number: 93201974.8
(22) Date of filing: 06.07.1993
(51) Int. Cl.: G05D 1/02, G01S 5/02, G01S 5/08, A01B 69/00

(54) **Method and apparatus for navigating an automatic guided vehicle**
Navigationsverfahren und -vorrichtung für ein automatisch geführtes Fahrzeug
Procédé et dispositif de navigation pour un véhicule guidé automatiquement

(30) Priority: 08.07.1992 NL 9201215
(43) Date of publication of application: 12.01.1994
(73) Proprietor: Texas Industries Inc., Willemstad, Curaçao (AN)
(72) Inventor: van der Lely, Cornelis, CH-6300 Zug (CH)
(74) Representative: Mulder, Herman

(56) References cited:
- EP-A- 0 423 332
- DE-A- 3 526 564
- DE-C- 1 113 253
- FR-A- 2 520 185
- FR-A- 2 656 429
- US-A- 4 939 522
- US-A- 4 986 384

## Description

The present invention relates to a vehicle, preferably an agricultural vehicle, such as a tractor, comprising a first transmitter/receiver which co-operates with a second transmitter/receiver connected to a computer and with at least two stationary third transmitter/receivers in order to locate and track the vehicle by the computer, the second and third transmitter/receivers being in a remote position with respect to said vehicle, the vehicle further comprising controls for operating the vehicle, which controls are remotely activated by control and operating signals from the computer.

Such a vehicle is known from US-A-4,939,522. The receiver on the vehicle described in this document co-operates with at least two spaced-apart transmitters and a data acquisition system or controller at a central location. By means of these units the vehicle can be located and tracked. Further the controller is capable to transmit control signals to the vehicle, which vehicle can receive these control signals, while on the vehicle there are provided activation systems or controls for effecting control of the vehicle steering, acceleration, deceleration, and the like. The whole system in the US-document can be applied for aircraft control, vehicle control in urban areas, control of transportation vehicles in facilities such as open pit mines, warehouses, airports and the like.

The purpose of the invention is to realise a suchlike vehicle which is capable to perform specific functions, particularly in the field of agriculture. According to the invention, the vehicle as described in the opening paragraph is characterized in that the vehicle is provided with further controls which are remotely activated by further control and operating signals from the computer and which control the operation of an implement coupled to the vehicle.

The vehicle, which is preferably constructed as an unmanned caterpillar tractor, is arranged for working a field automatically and continuously, especially by day and by night.

The invention will hereinafter further be explained with reference to the accompanying drawings, in which:
Figure 1 shows the farm buildings and plot of farming land, two vehicles provided with a transmitter which are working there, and four stationary receivers;
Figure 2 shows a receiver with, installed on a mast, a directional receive antenna and a transmit antenna for communication with the farm buildings;
Figure 3 shows a top view of a caterpillar vehicle and a schematic representation of the co-operation of the vehicle and a computer placed in the farm buildings, a stationary receiver and a remote control unit;
Figure 4 shows a computer and, on top of it, a monitor which displays a field to be worked and a vehicle in action thereon;
Figure 5 shows a remote control unit, by means of which the vehicle can be controlled and operated;
Figures 6 and 7 show a caterpillar tractor to which, on the front side and on the rear side, a plough is coupled;
Figure 8 is a schematic representation of the way in which the tractor provided with implements as depicted in Figures 6 and 7 can be moved back and forth across the field;
Figures 9 and 10 show a caterpillar tractor to which a rotary harrow is coupled on the rear side;
Figures 11 and 12 show a caterpillar tractor to which a mowing machine is coupled on the rear side, and
Figure 13 is a schematic representation of how the machines depicted in Figures 9 to 12 can be moved across the field.

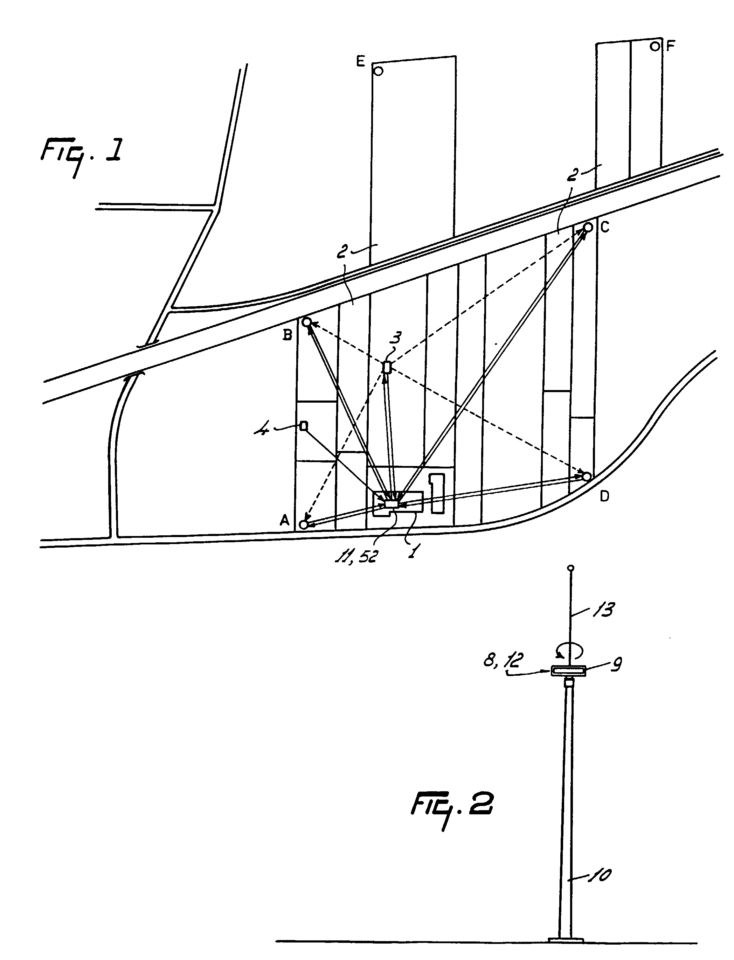

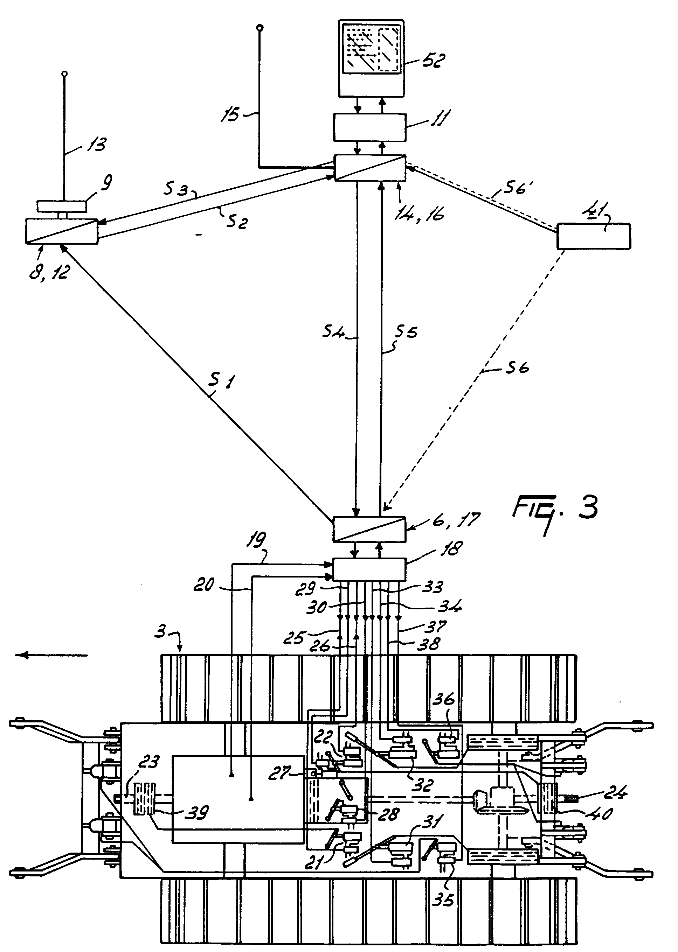

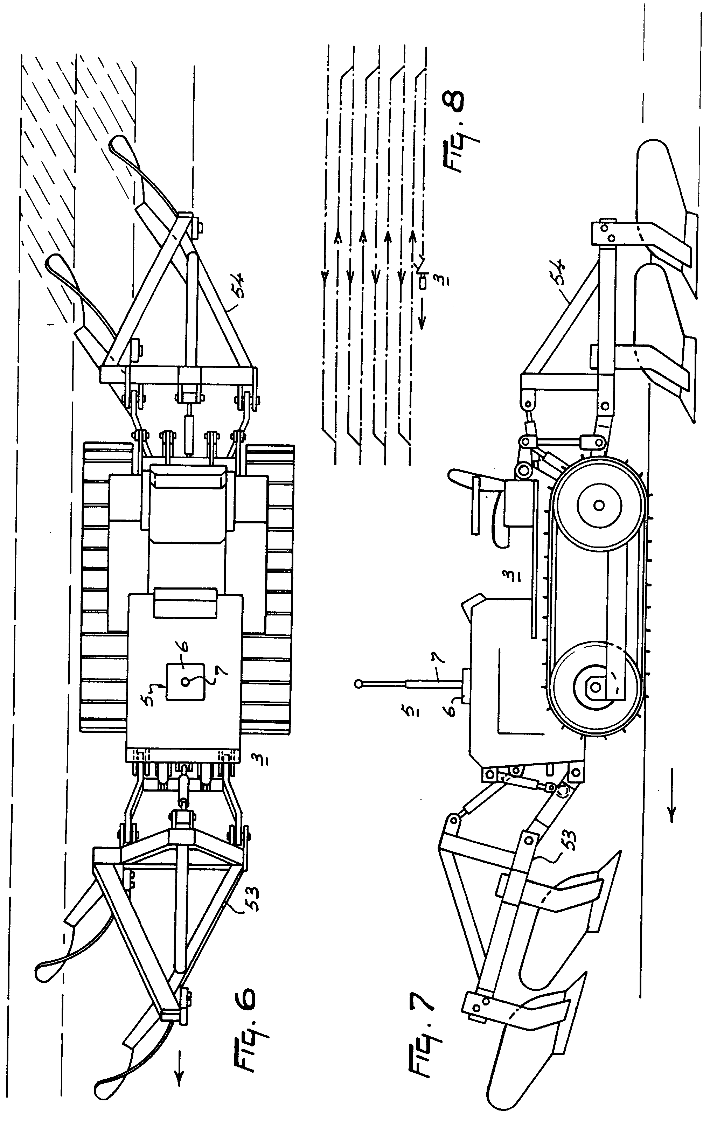

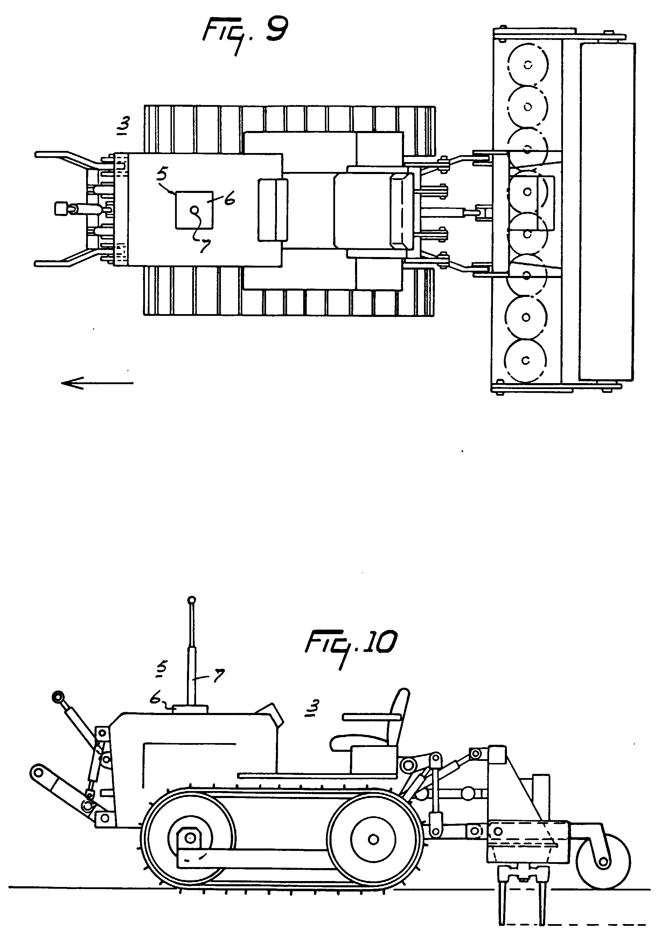

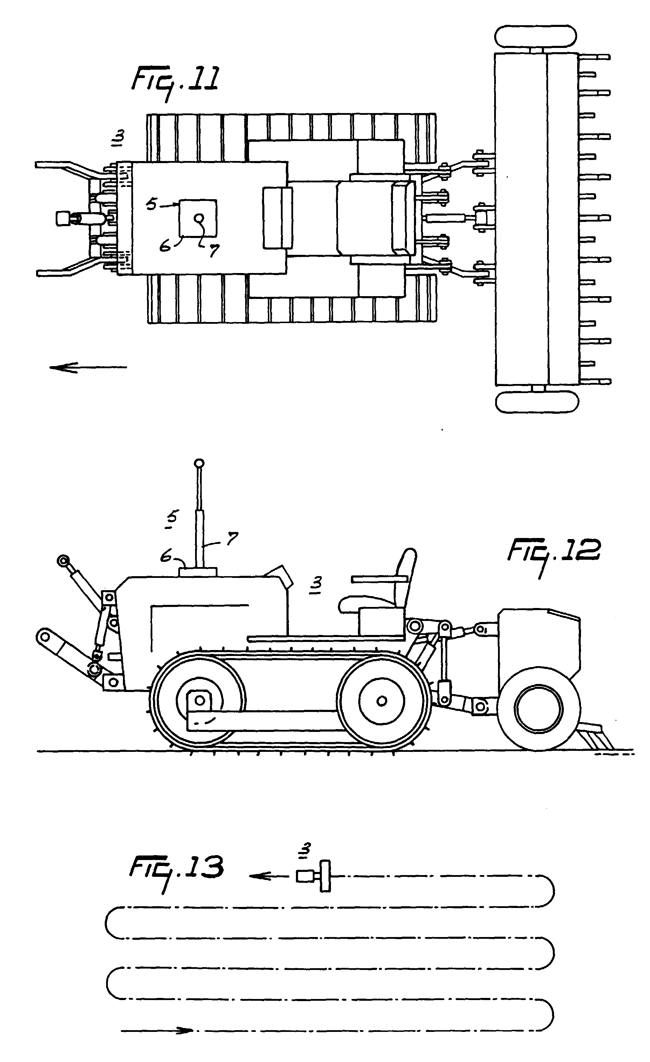

In Figure 1 there is shown a plot of ground with farm buildings 1, a farm house and barns. The plot of ground is divided into pieces of ground 2 to be worked individually, with two of these pieces of ground being worked by respective agricultural vehicles 3 and 4 in the form of a caterpillar tractor, to which one or several agricultural implements are coupled on the front and/or rear side. A transmitting system 5 comprising a transmitter 6 and a transmit antenna 7 is installed on each of the vehicles 3 and 4 (see Figures 6, 7 and 9 to 12). The antenna 7 is implemented as an omni-directional antenna, so that the radiation pattern generated by the transmitter is the same in all directions. The transmitting system 5 provided on each of the vehicles 3 and 4 co-operates with a receiving system which is made up of a plurality of stationary receivers 8, each provided with a rotatable, directional antenna 9. In Figure 1 each of these receivers 8 provided with receive antenna 9 is placed on a mast 10 in the vicinity of the corners of the farm ground, namely in positions marked by the letters A, B, C and D. Although in the depicted embodiment the transmitting system provided on the vehicle 3, 4 co-operates with a receiving system made up of receivers with receive antenna placed in positions A, B, C and D, it is possible to replace the receivers with receive antenna placed in positions B and C with the receivers with receive antenna in positions E and F in the event that the field to be worked is of a different size. The angle between the direction of the vehicle 3, 4, with respect to a respective receiver 8 and a fixed reference line can be determined by means of the rotatable directional receive antenna 9. At least two of such bearing angles are necessary to determine the position of the vehicle 3, 4, since the distances between the respective receivers are known. However, as it may occur that the vehicle is on or near the line connecting two receivers, a third receiver is desirable for the determination of the vehicle position. A more accurate determination of the position is obtainable when even more receivers are placed on or near the plot of farming land. The angular values found by the receivers are passed on to a computer 11 preferably installed in a farm building 1 (see Figure 11). This transmission of angular values can be effected by radio or by wire communication. For radio communication, each mast 10 is provided with a transmitter 12 and an antenna 13, while, preferably in the same farm building where the computer 11 is placed, there is provided a receiver 14 with an antenna 15 (see Figure 3) for the purpose of receiving angular values transmitted by means of the transmitter 12 and passing on these values to the computer 11. The computer 11 derives the position of the vehicle 3, 4 from two angular values and the distance between the receivers by means of which the angular values have been determined. It is practicable to obtain a number of values for the vehicle position co-ordinates, from several combinations of, in each case, two angular values determined by means of receivers in neighbouring positions. Thus, the co-ordinates of the position of vehicle 3, 4 are obtainable from the locating data from the receivers placed in the positions A and B, from the receivers placed in the positions B and C, from the receivers placed in the positions C and D, and from the locating data from the receivers placed in the positions A and D. In this way it is possible to determine four pairs of position co-ordinates of the vehicle 3, 4, from which the definite position co-ordinates of the vehicle can be determined by statistical processing. From the vehicle position co-ordinates thus determined each time by the computer, the computer 11 is capable of determining the path followed by the vehicle in the field, whereafter in the computer this path can be compared against a predetermined path, so that deviations can be determined, which deviations the computer 11 will covert into control signals for course corrections to the vehicle 3, 4 in the field. The control signals fixed by the computer 11 can be transmitted through a transmitter 16 provided in the farm building and the antenna 15, whilst on the vehicle 3, 4 there are provided a receiver 17 and controls to be defined into more detail to receive and process the automatic control signals fixed by the computer 11 as well as to control the vehicle accordingly.

Figure 2 depicts the mast 10, on which there are provided a receiver 8 and a transmitter 12 together with a rotatable directional receive antenna 9 and a transmit antenna 13. In the embodiment described there are four of such masts disposed on or near the corners of the plot of farming land.

In Figure 3 there is depicted the vehicle 3, a caterpillar tractor for instance, while in this figure it is also indicated schematically how this caterpillar tractor co-operates with control equipment disposed in a farm building and the various transmitters and receivers on or close to the corners of the plot of farming land. The caterpillar tractor is provided with a transmitter/receiver 6, 17, which co-operates with a transmitter/receiver 16, 14 disposed in a remote position and connected to the computer 11 and with the stationary transmitter/receivers 12, 8, of which only one is depicted in Figure 3, with signals S1 being transmitted by the transmitter 6 for the purpose of determining the position co-ordinates of the caterpillar tractor 3, which signals S1 can be received by the receiver 8, while the bearing angles S2 derived from these signals S1 are transmitted by the transmitter 12, which bearing angles S2 can be received by the receiver 14. Switching signals S3 to put the transmitter/receiver 12, 8 into and out of operation can be transmitted by the transmitter 16, which switching signals S3 can be received by the receiver 8. Additionally, control and operating signals S4 for the control and operation of the caterpillar tractor 3 and the implements to be coupled thereto can be transmitted by the transmitter 16, which control and operating signals S4 can be received by the receiver 17. Furthermore, signals S5 conveying information on the caterpillar tractor 3 can be transmitted by the transmitter 6, which signals can be received by the receiver 14. This information relates to vehicle parameters such as the speed of the engine and that of the power take-off shaft or shafts, the available fuel supply etc. For the determination of these vehicle parameters, measuring and recording means 18 to be further specified hereinafter are provided on the caterpillar tractor. Signals are passed on to the recording means 18 through lines 19 and 20 by means of measuring means not shown here, which signals indicate the engine speed and the fuel supply available at the engine. Measuring means 21 and 22 for determining the speed of the power take-off shafts 23 and 24, respectively, apply signals to the recording means 18 through the lines 25 and 26, respectively, which signals represent the speed of said power take-off shafts. The control and operation signals received by the receiver 17 are recorded by the recording means 18. On the caterpillar tractor there are provided controls 27 and 28 to operate the clutch and change gear, forward and reverse, of the caterpillar tractor 3, with the operating signals for these controls being applied thereto from the recording means 18 through the lines 29 and 30, respectively. Furthermore, on the caterpillar tractor 3 there are provided controls 31 and 32 to operate the left-hand and right-hand track drive, and, consequently, to steer the vehicle, with the operating signals for these controls 31 and 32 being applied thereto from the recording means 18 through the lines 33 and 34, respectively. In addition, on the caterpillar tractor 3 there are provided controls 35 and 36 to operate the respective lifting devices, one in front of the caterpillar tractor and one behind it, with the operating signals for these controls 35 and 36 being applied thereto from the recording means 18 through the lines 37 and 38, respectively. Finally, on the caterpillar tractor 3 there are provided controls 39 and 40 to engage and disengage the front power take-off shaft and the rear power take-off shaft, respectively, with the operating signals for these controls 39 and 40 being applied thereto from the recording means 18 through the said lines 25 and 26, respectively.

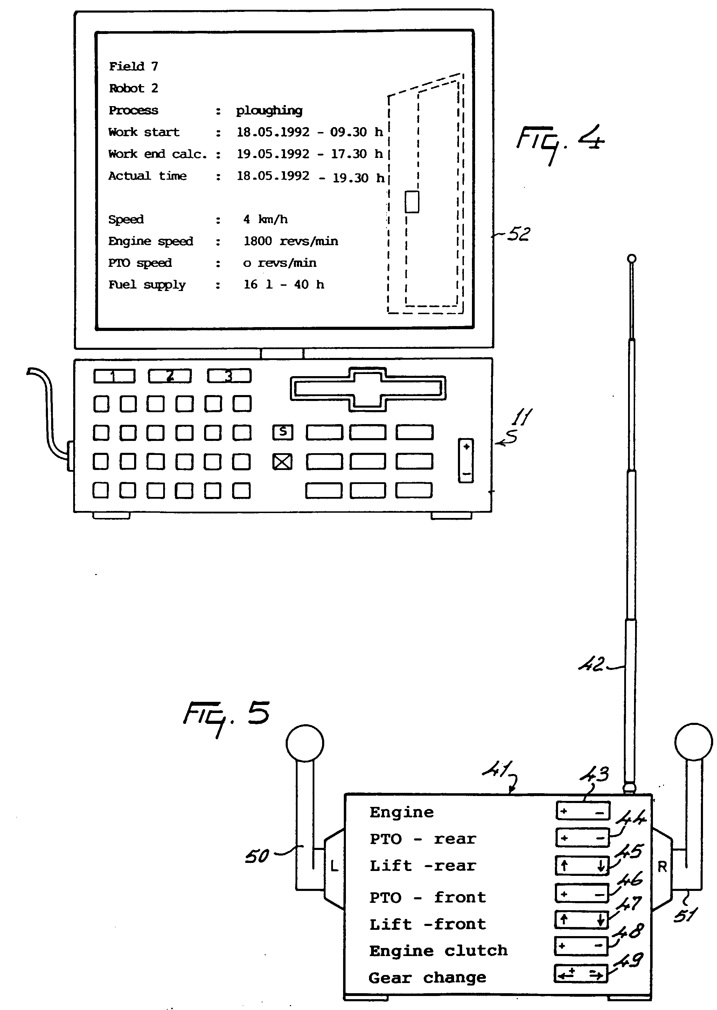

Besides that the caterpillar tractor 3 with the implements to be coupled thereto is capable of being automatically controlled and operated by means of the computer 11, the possibility of controlling and operating the machine by hand is provided. For this purpose there is provided a portable remote control unit 41. This remote control unit 41 can be placed in the room where the computer 11 is or equally well be taken along by the user to the field to be worked. The control and operating signals for the caterpillar tractor can be transmitted by radio from the remote control unit 41 either directly to the receiver 17 on the caterpillar tractor 3 or through the receiver 14 connected to the computer 11 and transmitter 16 to the receiver 17 provided on the caterpillar tractor 3. In Figure 3 the two possibilities are indicated by the signals S6 and S6'. Figure 5 illustrates a remote control unit 41 with a transmit antenna 42, a transmitter (not shown) with control electronics provided in the device, toggle-type controls 43 through 49 and control handles 50 and 51. The controls 43, 44 and 46 serve to start and stop the engine, the tractor's rear power take-off shaft and the front power take-off shaft, respectively. The controls 45 and 47 serve to put the respective lifting device on the rear side and on the front side of the tractor into an upward position or a downward position. The controls 48 and 49 are to engage the clutch and to put the change gear into forward or reverse speed. Dependent on the controls which have been operated, the respective control and operating actions can be performed on the tractor by means of the control handles 50 and 51.

The way in which the tractor is controlled and operated, either fully automatically by means of the computer 11 or by means of the remote control unit 41, can be made visible by means of a monitor 52 connected to the computer 11. The computer 11 with the monitor 52 connected thereto is shown in Figure 4, where the monitor screen displays a field to be worked, including a vehicle in action, while also miscellaneous data concerning the tractor and its functioning are indicated on the screen. So, the tractor with the implements to be coupled thereto can be controlled and operated by means of the remote control unit 41, either from the field being worked itself on account of the user's visual observation of the tractor and the activities performed thereby or from the computer room on account of observation of the field with the tractor working thereon as displayed on the monitor 52.

There are various ways to accomplish the eventual programming of the computer 11. By a first method, for every specific process to be undergone by the soil or vegetation, the user carefully drives once through the respective plots. In doing so, the tractor is controlled by means of the remote control unit 41. The path then being covered is recorded by means of the position finding equipment and stored in the memory of the computer 11. The operation of the implements, such as for lifting and lowering the implements and putting the power take-off shaft into and out of operation, is put on record by the computer 11 through the transmitter 6 on the tractor and the receiver 16 connected to the computer 11. Once the tractor movement on the field to be worked and the operation of the implements have been fixed, the programming is completed, and the respective processes are frequently repeatable by causing the computer 11 to contact the tractor by radio communication. The eventual programming can also be effected by means of an exact specification of the field, for instance through cadastral data, with the software supplier then furnishing the complete programs for the different processes. The particular data on the field to be worked and on the tractor with implements to be utilised can be entered into the program by the user himself, if required.

There are two ways to bring the tractor to the field. When the field is only accessible through a public road, the vehicle has either to be manned and driven or to be transported on a trailer to this field. If it is not necessary to make use of a public road, the path from the farm building to the field can also be included in the program.

When the tractor is controlled from the computer 11, it remains necessary to conduct position finding all the time, providing a feedback to check whether the pre-programmed path is actually being followed, permitting a correction to be made as may be necessary. The position finding equipment is put into operation as soon as the non-recurrent tractor movement or the tractor movement under computer control starts and it is switched off as soon as the vehicle engine stops running; the switching signals S3 mentioned before are utilised for this purpose. When the position-finding results diverge excessively, the vehicle comes automatically to a standstill, since it is then assumed that a system failure has occurred. This also happens in the event that a receiver 8 needed for position finding breaks down.

Figures 6 and 7 depict a caterpillar tractor, to which agricultural implements of identical type are coupled on the front side and on the rear side, i.e. a plough 53 and plough 54, respectively. This arrangement enables the vehicle, without being turned round, but after a certain displacement in a side-rearward or side-forward direction (see Figure 8), to be moved back and forth across a field to be worked. Dependent on the direction of motion, one of the two agricultural implements will be in the operating condition. In the event that the caterpillar tractor depicted in Figures 6 and 7 is moved forward, the plough 54 coupled to the tractor on the rear side slides through the soil, whereas the lifting device keeps the plough coupled to the tractor on the front side in a raised position. When the caterpillar tractor is moved backward, the plough 53 is fed into the soil, whereas the plough 54 is lifted to above the soil surface level. Figures 9 and 10 depict a caterpillar tractor, to which a rotary harrow is coupled on the rear side, while in Figures 11 and 12 a seed drill is coupled to the caterpillar tractor on the rear side. In such situations, the vehicle is moved back and forth across a field to be worked, the vehicle being turned round at the extremities, as is indicated in Figure 13.

## Claims

1. A vehicle (3, 4) comprising a first transmitter/receiver (6, 17) which co-operates with a second transmitter/receiver (16, 14) connected to a computer (11) and with at least two stationary third transmitter/receivers (12, 8) in order to locate and track the vehicle by the computer (11), the second and third transmitter/receivers, being in a remote position with respect to said vehicle (3, 4), the vehicle further comprising controls (27, 28; 31, 32) for operating the vehicle, which controls are remotely activated by control and operating signals (S4) from the computer (11), characterized in that the vehicle is provided with further controls (21, 22; 35, 36) which are remotely activated by further control and operating signals (S4) from the computer (11) and which control the operation of an implement coupled to the vehicle (3, 4).

2. A vehicle (3, 4) as claimed in claim 1, characterized in that at at least one side the vehicle is provided with a lifting device for coupling an implement to the vehicle and moving the implement, when coupled to the vehicle, in up- and downward direction, the lifting device being operated by said further controls (35, 36).

3. A vehicle (3, 4) as claimed in claim 1 or 2, characterized in that the vehicle is provided with a power take-off shaft (23, 24) for driving an implement coupled to the vehicle, the drive (22) of the power take-off shaft (23, 24) being engaged and disengaged by said further controls (21, 22).

4. A vehicle (3, 4) as claimed in any one of the preceding claims, characterized in that on the vehicle (3, 4) there is provided a further computer with a program to cause the vehicle to move along a predetermined path.

5. A vehicle (3, 4) as claimed in claim 4, characterized in that an agricultural implement (53, 54) of one and the same type is coupled to the front and rear sides of the vehicle (3, 4), whilst the vehicle (3, 4), without turning round but after a certain displacement in side-rearward or side-forward direction, is movable back and forth across a field (2) to be worked, with one of the two agricultural implements (53, 54), dependent on the direction of motion, being in the working condition.

6. A vehicle (3, 4) as claimed in claim 4, characterized in that at least one agricultural implement (53, 54) is coupled to the vehicle (3, 4), while the vehicle (3, 4) is movable back and forth across a field (2) to be worked and is turned round at the extremities thereof.

## Patentansprüche

1. Fahrzeug (3, 4) mit einem ersten Sender/Empfänger (6, 17), der mit einem an einen Computer (11) angeschlossenen zweiten Sender/Empfänger (16, 14) und mindestens zwei stationären dritten Sendern/Empfängern (12, 8) zum Orten und Leiten des Fahrzeuges mittels des Computers (11) zusammenwirkt, wobei der zweite und die dritten Sender/Empfänger von dem Fahrzeug (3, 4) entfernt angeordnet sind, und wobei das Fahrzeug außerdem Steuerungen (27, 28; 31, 32) zu seinem Betrieb aufweist, die durch Steuer- und Betätigungssignale (S4) des Computers (11) fernbetätigt werden,
dadurch gekennzeichnet, daß das Fahrzeug weitere Steuerungen (21, 22; 35, 36) aufweist, die durch weitere Steuer- und Betätigungssignale (S4) des Computers (11) fernbetätigt werden und die Operationen eines an das Fahrzeug (3, 4) angeschlossenen Gerätes steuern.

2. Fahrzeug (3, 4) nach Anspruch 1,
dadurch gekennzeichnet, daß das Fahrzeug an mindestens einer Seite eine Hebevorrichtung aufweist, um ein Gerät an das Fahrzeug anzuschließen und das an das Fahrzeug angeschlossene Gerät aufwärts und abwärts zu bewegen, wobei die Hebevorrichtung durch die weiteren Steuerungen (35, 36) betätigt wird.

3. Fahrzeug (3, 4) nach Anspruch 1 oder 2,
dadurch gekennzeichnet, daß das Fahrzeug eine Zapfwelle (23, 24) zum Antreiben eines an das Fahrzeug angeschlossenen Gerätes aufweist, wobei der Antrieb (22) der Zapfwelle (23, 24) durch die weiteren Steuerungen (21, 22) ein- und ausgeschaltet wird.

4. Fahrzeug (3, 4) nach einem der vorhergehenden Ansprüche,
dadurch gekennzeichnet, daß an dem Fahrzeug (3, 4) ein weiterer Computer vorhanden ist, dessen Programm bewirkt, daß sich das Fahrzeug entlang einer vorgegebenen Route bewegt.

5. Fahrzeug (3, 4) nach Anspruch 4,
dadurch gekennzeichnet, daß an der Front- und der Heckseite des Fahrzeuges (3, 4) je ein landwirtschaftliches Gerät (53, 54) desselben Typs angeschlossen ist, so daß das Fahrzeug (3, 4) ohne Wendemanöver, jedoch nach einer bestimmten Bewegung seitlich rückwärts oder seitlich vorwärts auf einem zu bearbeitenden Feld (2) vorwärts und zurück zu bewegen ist, während in Abhängigkeit von der Bewegungsrichtung jeweils eines der beiden landwirtschaftlichen Geräte (53, 54) in der Arbeitslage ist.

6. Fahrzeug (3, 4) nach Anspruch 4,
dadurch gekennzeichnet, daß mindestens ein landwirtschaftliches Gerät (53, 54) an das Fahrzeug (3, 4) angeschlossen ist, wobei das Fahrzeug (3, 4) auf einem zu bearbeitenden Feld (2) vorwärts und zurück bewegt und an den Enden des Feldes gewendet wird.

## Revendications

1. Véhicule (3, 4) comprenant un premier émetteur/récepteur (6, 17) qui coopère avec un deuxième émetteur/récepteur (16, 14) relié à un ordinateur (11) et avec au moins deux troisièmes émetteurs/récepteurs (12, 8) stationnaires afin de localiser et de suivre à la trace le véhicule par l'ordinateur (11), le deuxième et le troisième émetteurs/ récepteurs étant en une position éloignée par rapport audit véhicule (3, 4), le véhicule comprenant en outre des commandes (27, 28; 31, 32) pour faire fonctionner le véhicule, lesquelles commandes sont actionnées à distance par des signaux (S4) de commande et de fonctionnement venant de l'ordinateur (11),
**caractérisé** en ce que le véhicule est muni d'autres commandes (21, 22; 35, 36) qui sont actionnées à distance par d'autres signaux (S4) de commande et de fonctionnement venant de l'ordinateur (11) et qui commandent le fonctionnement d'une machine couplée au véhicule (3, 4).

2. Véhicule (3, 4) selon la revendication 1, caractérisé en ce que, sur au moins un côté, le véhicule est muni d'un dispositif élévateur pour coupler une machine au véhicule et pour mouvoir la machine, quand elle est couplée au véhicule, vers le haut et vers le bas, le dispositif élévateur étant mis en fonctionnement par lesdites autres commandes (35, 36).

3. Véhicule (3, 4) selon la revendication 1 ou 2, caractérisé en ce que le véhicule est muni d'un arbre de prise de force (23, 24) pour entraîner une machine couplée au véhicule, l'entraînement (22) de l'arbre de prise de force (23, 24) étant embrayé et débrayé par lesdites autres commandes (21, 22).

4. Véhicule (3, 4) selon l'une quelconque des revendicatins précédentes, caractérisé en ce qu'il est prévu sur le véhicule (3, 4) un autre ordinateur avec un programme pour provoquer que le véhicule circule selon un trajet prédéterminé.

5. Véhicule (3, 4) selon la revendication 4, caractérisé en ce qu'une machine agricole (53, 54) d'un seul et même type est couplée à l'avant et à l'arrière du véhicule (3, 4), tandis que le véhicule (3, 4) peut circuler sans tourner mais après un certain déplacement en sens latéral-arrière ou latéral-avant, en parcourant des allers et retours sur un champ (2) à travailler, avec une des deux machines agricoles (53, 54) étant, selon le sens du mouvement, en situation de travail.

6. Véhicule (3, 4) selon la revendication 4, caractérisé en ce qu'au moins une machine agricole (53, 54) est couplée au véhicule (3, 4), tandis que le véhicule (3, 4) peut se mouvoir en allant et venant sur un champ (2) à travailler, et qu'on le fait tourner aux extrémités de ce champ.
